# EUROPÄISCHE PATENTSCHRIFT

(11) **EP 0 542 384 B1**
(45) Veröffentlichungstag und Bekanntmachung des Hinweises auf die Patenterteilung: **02.01.1997**
(21) Anmeldenummer: 92250320.6
(22) Anmeldetag: 04.11.1992
(51) Int. Cl.: F16C 13/00, B21B 27/02, D21G 1/02

(54) **Hydraulisch aufweitbare Walze**
Hydraulically expandable roll
Rouleau à dilatation commandée hydrauliquement

(30) Priorität: 13.11.1991 DE 4137876
(43) Veröffentlichungstag der Anmeldung: 19.05.1993
(73) Patentinhaber: MANNESMANN Aktiengesellschaft, 40027 Düsseldorf (DE)
(72) Erfinder: Hansen, Manfred, W-4000 Düsseldorf (DE)
(74) Vertreter: Meissner, Peter E., Dipl.-Ing.

(56) Entgegenhaltungen:
- EP-A- 0 127 590
- DE-A- 2 815 892
- DE-C- 3 342 054
- DE-C- 3 414 242
- GB-A- 2 186 662
- US-A- 4 305 191

## Beschreibung

Die Erfindung betrifft eine hydraulisch aufweitbare Walze mit einem Walzengrundkörper hoher Biegesteifigkeit und einem auf dem Walzengrundkörper aufgesetzten Walzenmantel, zwischen den und dem Grundköper über Zuführungsbohrungen ein Druckmedium leitbar ist, wodurch der gegen den Walzengrundkörper abgedichtete Walzenmantel mindestens bereichsweise elastisch dadurch verformbar ist, daß die beidseitig eines - bezogen auf die Längserstreckung der Walze - mittleren Walzenmantelbereichs verbleibenden Seiten des Walzenmantels, dessen Innendurchmesser vom mittleren Walzenmantelbereich ausgehend, nach außen erweitert ist, hydraulisch aufweitbar sind.

Es gehört zum Grundwissen des auf dem Gebiet des Flachwalzens tätigen Fachmannes, daß ein flachgewalztes Erzeugnis nicht ohne weiteres eine gleichmäßige Dicke über die Breite aufweist, da die Walzen elastische Formänderungen erfahren und nicht unendlich starr sind. Auch der Einfluß der Temperaturen, der Reibung und damit des Verschleißes sind von Bedeutung.

Es sind verschiedene Maßnahmen bekannt, um die unvermeidbare Biegeverformung der Walze zu beherrschen, um auf die Profilgestaltung beim Flachwalzen Einfluß zu nehmen. So ist es beispielsweise bekannt, durch Vergrößerung des Walzendurchmessers die Biegesteifigkeit zu erhöhen, allerdings wirkt sich dies nicht immer vorteilhaft auf das Formänderungsvermögen schwer umformbarer Materialien aus. Man hat sich des weiteren mit Mehrwalzenanordnungen von 4 bis 20 Walzen geholfen, um die Walzenbiegung durch eine Mehrzahl von Stützwalzen abzufangen. Eine andere weit verbreitete Maßnahme besteht darin, das Profil der Arbeits- oder Stützwalze der zu erwartenden Durchbiegung entsprechend zu gestalten, d. h., die Walzen zu bombieren. Meistens wird mit ballig (konvex) geschliffenen Walzballen gearbeitet.

Schließlich ist durch die DE 33 42 054 C2 vorgeschlagen worden, Mantelwalzen zu verwenden, deren Ballen durch einen innen regelbaren Flüssigkeitsdruck bombiert werden können. Über Bohrungen im Walzengrundkörper wird ein Druckmedium in kammerförmige Ausnehmungen zwischen den zylindrischen Walzenmantel und den Walzengrundkörper eingeleitet, um mit sehr hohem Druck ein "Aufblasen" des Walzenmantels vorzunehmen. Diese aufblasbaren Walzen können, je nach Druckbeaufschlagung, unterschiedliche Balligkeiten des Walzenmantels einstellen, die von der Elastizität des Walzenmantels, der Höhe des Druckes und den Möglichkeiten der Abdichtung zwischen Walzenmantel und Walzengrundkörper abhängig sind.

Mit dem "Aufblasen" von Walzen befaßt sich die vorliegende Erfindung, nachdem erkannt wurde, daß verschiedene Probleme der bekannten Walzen ihren erfolgreichen Einsatz in der Praxis negativ beeinflussen. Ein Problem besteht in der Wahl der richtigen Eigensteifigkeit des Walzenmantels. Wäre er unendlich weich, passiert in der gedrückten Zone nichts, außer daß sich der Walzenmantel auf den Walzengrundkörper auflegen würde. Wäre der Walzenmantel unendlich stabil, würde er sich nicht aufweiten.

Ein anderes Problem der bekannten aufblasbaren Walze besteht darin, daß bei einem Druckverlust im Randbereich des Walzenmantels sich dieser an den Walzengrundkörper unter der Walzlast anlegt, wodurch die sich konisch erweiternden Zwischenräume nicht mehr vorhanden sind. Diese extreme Verformung des Walzenmantels in diesem Bereich bedeutet, daß das gewalzte Band praktisch Ausschuß ist, also nicht mehr verkauft werden kann.

Aus DE 34 14 242 C 1 ist eine gattungsgemäße Walze für ein Walzgerüst bekannt, bei der an einen mittleren Walzenmantelbereich anschließend sich nach außen erweiternde Ringkammern vorgesehen sind, in denen einen Walzenkern mit in axialer Richtung gleichbleibendenden Durchmesser umfassende ringkolbenähnliche Keilringe vorgesehen sind, die durch Druckbeaufschlagung in axialer Richtung verschiebbar sind und somit den Walzendurchmesser in deren Endbereich variierbar gestalten. Bei Druckausfall verbleiben die Keilringe in ihrer momentanen Lage und bilden somit eine mechanische Stützung für die Balligkeit der Walze. Es läßt sich demgemäß nicht sichern, daß für diesen Fall eine definierte Kontur der Walze vorliegt.
Der Erfindung lag deshalb die Aufgabe zugrunde, bei einem Druckverlust eine definierte mechanische Abstützung des Walzenmantels zu schaffen, so daß mit gewissen Einschränkungen weitergewalzt werden kann.

Zur Lösung der Aufgabe wird erfindungsgemäß vorgeschlagen, daß bei der gattungsgemäßen Walze, bei der mittlere Walzenmantelbereich am Walzengrundkörperumfang flächig anliegend befestigt ist und zwischen dem Innenumfang des Walzenmantels und dem Walzengrundkörper beidseitig des mittleren Walzenmantelbereiches konische Füllstückringe eingesetzt sind, mit denen im druckmittelfreien Entlastungszustand der Walze die Zwischenräume ausgefüllt sind, die konischen Füllstückringe einstückig und in axialer Richtung unverschiebbar fixiert sind und daß in den Füllstückringen Nuten zum Einleiten des Druckmediums und ringförmige Dichtungen eingebracht sind.

Damit ist der mittlere Bereich der hydraulisch aufweitbaren Walze von dem Druckmedium unverformbar gestaltet und es liegt in diesem Bereich eine normale festgefügte Mantelwalze vor. Hingegen können die Bereiche beidseitig des mittleren unverformten Walzenmantelbereichs hydraulisch aufgeweitet werden, wie es die DE 34 14 242 C1 vorschlägt. Dadurch ist eine besonders günstige Verformung des Walzenmantels möglich; denn durch das konische "Auftrichtern" des Walzenmantels zum Ballenende hin, ergibt sich dort automatisch eine immer größere Aufweitung, so daß die Walze eine Kurvenform annimmt. Die Erfindung bewirkt, daß durch Ausgleich des Zwischenraumes zwischen Walzengrundkörper und trichterförmig erweitertem Walzenmantel im Falle von Druckverlusten in diesem Bereich eine Abstützung des Walzenmantels mechanisch vorgenommen werden kann, so daß mit Einschränkungen weitergewalzt werden kann.

Wenn nach einem anderen Merkmal vorgesehen ist, den Walzenmantel an seiner Oberfläche ballig zu schleifen, so kann dieser ballige Schliff nun geregelt und dadurch verändert werden, daß nur die Bereiche beidseitig des mittleren Walzenmantelbereichs hydraulisch aufgeweitet werden. Damit kann die vorher gezielt geschliffene Balligkeit im Walzspalt geregelt zurückgenommen werden.

Vorzugsweise entspricht der unverformbare mittlere Bereich des Walzenmantels etwa der Breite des schmalsten zu walzenden Walzgutes.

Wird mit der erfindungsgemäßen Walze ein breites Band gewalzt, so wird geringe Balligkeit benötigt, d. h., die beidseitigen Enden des Walzenmantels werden "aufgeblasen". Wird schmales Band gewalzt, so ist große Balligkeit erforderlich. Durch einfaches Entlasten der beidseitigen Enden des Walzenmantels, also Rücknahme des hydraulischen Druckes, wird automatisch eine größere Balligkeit erreicht. Mit der erfindungsgemäßen Walze ist in vorteilhafter Weise eine Veränderung der mechanisch vorgegebenen Balligkeit möglich.

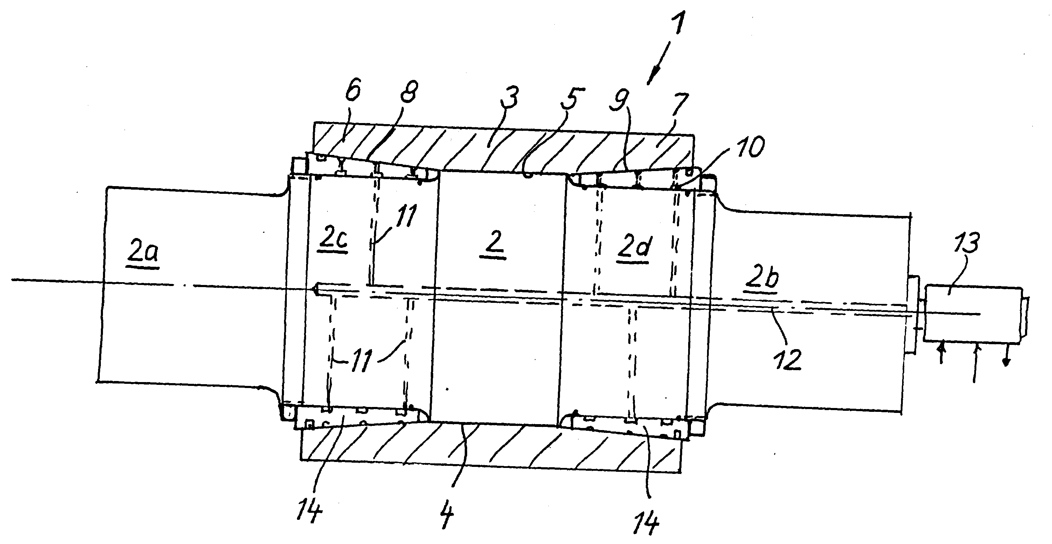

Ein Ausführungsbeispiel der Erfindung ist in der Zeichnung dargestellt und wird nachfolgend beschrieben:

In der einzigen Zeichnungsfigur ist mit 1 die hydraulisch aufblasbare Walze beschrieben, die aus dem Walzengrundkörper 2 und dem Walzenmantel 3 besteht. Der Walzengrundkörper weist in bekannter Weise an beiden Enden Zapfen 2a und 2b auf, an denen die Walze in bekannter Weise im Walzgerüst drehbar gelagert ist. Mit 4 ist der mittlere Bereich, d. h. eine mittlere Umfangsfläche des Walzengrundkörpers 2 bezeichnet, an dem die Innenfläche 5 des Walzenmantels 3 flächig anliegt. In der Praxis ist der Walzenmantel 3 auf die Umfangsfläche 4 des Walzengrundkörpers 2 aufgeschrumpft und somit vorgespannt und reibschlüssig befestigt.

Die beidseitig des mittleren Bereiches 4 liegenden Endbereiche 6 und 7 des Walzenmantels 3 verlaufen an ihren Innenumfangsflächen 8 und 9 konisch nach außen, so daß sich die Wanddicke des Walzenmantels 3 in Richtung der Walzenzapfen 2a, 2b verjüngt. Gleichzeitig sind die dem sich konisch erweiternden Innenumfang des Walzenmantels 3 gegenüberliegenden Zylindermantelflächen 2c, 2d im Durchmesser geringer als der mittlere Bereich 4, so daß sich ein Zwischenraum zwischen dem Walzenmantel 3 und dem Walzengrundkörper 2 ergibt. Dieser Zwischenraum ist durch Füllstückringe (konische Buchsen) 14 verschlossen, in denen Nuten zum Einleiten von Druckmedium eingebracht sind, welches durch Bohrungen 11 und 12 über eine drehbare Hydraulikzuführung 13 zuführbar ist. Der Walzballen des Walzenmantels 3 kann konvex bombiert geschliffen sein. Die Größe der Bombierung ist durch Einleitung des Druckmediums über die Leitungen 11, 12 in die Nuten und in den Zwischenraum zwischen Walzenmantel 3 und Walzengrundkörper 2 veränderbar.

Wie in der Zeichnungsfigur erkennbar, entspricht der unverformbare mittlere Bereich 4,5 von Walzenmantel und Walzengrundkörper etwa einem Drittel der Ballenlänge, was in etwa der Breite des schmalsten zu walzenden Bandes entspricht.

## Patentansprüche

1. Hydraulisch aufweitbare Walze (1) mit einem Walzengrundkörper (2) hoher Biegesteifigkeit und einem auf dem Walzengrundkörper aufgesetzten, gegen den Walzengrundkörper abgedichteten Walzenmantel (3), dessen mittlerer Bereich (5) am Walzengrundkörperumfang (4) flächig anliegend befestigt ist und dessen Innendurchmesser vom mittleren Walzenmantelbereich ausgehend nach außen erweitert ist, wobei die beidseitig des mittleren Walzenmantelbereiches verbleibenden Bereiche (6,7) des Walzenmantels, durch Einleitung eines Druckmediums über Zuführungsbohrungen (11,12) zwischen den Walzenmantel und den Grundkörper hydraulisch elastisch aufweitbar und zwischen dem Innenumfang des Walzenmantels (3) und dem Walzengrundkörper (2) beidseitig des mittleren Walzenmantelbereichs konische Füllstückringe (14) eingesetzt sind, mit denen im druckmittelfreien Entlastungszustand der Walze (1) die Zwischenräume ausgefüllt sind,
dadurch gekennzeichnet,
daß die konischen Füllstückringe (14) einstückig und in axialer Richtung unverschiebbar fixiert sind und daß in den Füllstückringen (14) Nuten (10) zum Einleiten des Druckmediums und ringförmige Dichtungen eingebracht sind.

2. Hydraulisch aufweitbare Walze nach Anspruch 1,
dadurch gekennzeichnet,
daß die Außenumfangsfläche des Walzenmantels (3) in bekannter weise ballig geschliffen ist.

3. Hydraulisch aufweitbare Walze nach Anspruch 1 und 2,
dadurch gekennzeichnet,
daß der umverformbare mittlere Walzenmantelbereich (5) etwa der Breite des schmalsten zu walzenden Walzgutes entspricht.

## Claims

1. A hydraulically expandable roller (1) having a roller base body (2) of high flexural strength and a roller shell (3) placed on the roller base body which is sealed off from the roller base body, the central region (5) of which shell is attached, in areal contact, to the periphery (4) of the roller base body, and the internal diameter of which is widened outwards, starting from the central region of the roller shell, the regions (6, 7) of the roller shell which remain on either side of the middle roller shell region being hydraulically expandable elastically by introducing a pressure medium via feed bores (11, 12) between the roller shell and the base body and conical filler rings (14) being inserted between the inner periphery of the roller shell (3) and the roller base body (2) on either side of the central roller shell region, with which rings the gaps are filled in the pressure-medium-free relieved state of the roller (1),
characterised in that the conical filler rings (14) are integral and are fixed non-displaceably in the axial direction and that grooves (10) for introducing the pressure medium and annular seals are made in the filler rings (14).

2. A hydraulically expandable roller according to Claim 1, characterised in that the external peripheral surface of the roller shell (3) is ground crowned in known manner.

3. A hydraulically expandable roller according to Claim 1 and 2, characterised in that the non-deformable central roller shell region (5) corresponds approximately to the width of the narrowest rolling stock which is to be rolled.

## Revendications

1. Cylindre (1) pouvant être élargi hydrauliquement et comportant un corps de base (2) du cylindre présentant une rigidité à la flexion élevée, et un bandage de cylindre (3) pouvant être monté sur le corps de base du cylindre et pouvant être rendu étanche par rapport au corps de base du cylindre, dont la zone centrale (5) est fixée par contact superficiel sur la périphérie (4) du corps de base du cylindre, et dont le diamètre interne partant de la zone centrale du bandage de cylindre s'élargit vers l'extérieur, les zones (6,7) du bandage de cylindre, restant des deux côtés de la zone centrale du bandage de cylindre, pouvant être élargies élastiquement et hydrauliquement par l'introduction d'un fluide de pression par l'intermédiaire de perçages d'amenée (11,12) entre le bandage de cylindre et le corps de base, et des bagues intercalaires coniques (14) étant montées entre la périphérie interne du bandage de cylindre (3) et le corps de base (2) du cylindre, des deux côtés de la zone centrale du bandage de cylindre, par lesquelles les espaces intermédiaires sont remplis dans l'état de détente libre de fluide de pression du cylindre (1),
caractérisé en ce que les bagues intercalaires coniques (14) sont réalisées en une seule pièce et sont fixées de façon à ne pas pouvoir être déplacées en direction axiale, et en ce que des gorges (10) pour l'introduction du fluide de pression et des joints d'étanchéité annulaires sont prévus dans les bagues intercalaires (14).

2. Cylindre pouvant être élargi hydrauliquement selon la revendication 1,
caractérisé en ce que la face périphérique externe du bandage de cylindre (3) est formée de manière connue de façon bombée.

3. Cylindre pouvant être élargi hydrauliquement selon l'une des revendications 1 ou 2,
caractérisé en ce que la zone centrale (5) du bandage de cylindre, ne pouvant être déformée, correspond à peu près à la largeur du produit de laminage le plus mince à laminer.
